(19) Europäisches Patentamt
European Patent Office
Office européen des brevets

(11) Numéro de publication : **0 027 439**
**B1**

(12) # FASCICULE DE BREVET EUROPÉEN

(45) Date de publication du fascicule du brevet : **25.07.84**

(51) Int. Cl.³ : **C 08 L 27/06**, C 08 K 5/34, C 08 K 5/57

(21) Numéro de dépôt : **80870043.9**

(22) Date de dépôt : **08.10.80**

(54) **Procédé de stabilisation de résines à base de polymères du chlorure de vinyle.**

(30) Priorité : **12.10.79 FR 7925414**

(43) Date de publication de la demande : **22.04.81 Bulletin 81/16**

(45) Mention de la délivrance du brevet : **25.07.84 Bulletin 84/30**

(84) Etats contractants désignés : **BE CH DE FR GB IT LI NL SE**

(56) Documents cités : **Néant**
**Le dossier contient des informations techniques présentées postérieurement au dépôt de la demande et ne figurant pas dans le présent fascicule.**

(73) Titulaire : **M & T Chemicals, Inc.**
**Rahway, New Jersey 07065 (US)**

(72) Inventeur : **Boussely, Jean**
**14, Rue Lagille**
**F-75018 Paris (FR)**
Inventeur : **Pigerol, Charles**
**8, Rue Carnot**
**F-93400 Saint-Ouen (FR)**
Inventeur : **de Cointet de Fillain, Paul**
**9, Rue Charles Nodier**
**F-31500 Toulouse (FR)**

(74) Mandataire : **Paget, Hugh Charles Edward et al**
**MEWBURN ELLIS & CO. 2/3 Cursitor Street**
**London EC4A 1BQ (GB)**

**EP 0 027 439 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention se rapporte de manière générale à la stabilisation des résines vinyliques à base de polymères et copolymères du chlorure de vinyle.

L'invention se rapporte plus particulièrement à un procédé de stabilisation mettant en œuvre une association d'un dérivé de dihydropyridine de formule générale :

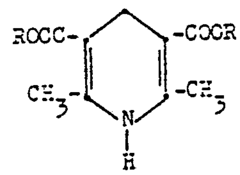

(I)

dans laquelle R représente un radical alkyle linéaire contenant de 1 à 22 atomes de carbone, un radical alkényle ou alkynyle linéaire contenant de 3 à 18 atomes de carbone, un radical aralkyle, éventuellement substitué en position ortho ou para par un atome d'halogène ou par un radical méthyle ou méthoxy, un radical $R_3—O—(CH_2)_m—$ dans lequel m prend la valeur 2, 3 ou 4 et $R_3$ représente un radical alkyle linéaire contenant de 1 à 4 atomes de carbone ou $R_3$ représente un radical phényle, et d'un dérivé organostannique répondant à l'une des formules générales :

$(R_1)_2Sn(OCOR_2)_2$ (II)

$(R_1)_2Sn(SR_2)_2$ (III)

$(R_1)_2Sn\ [S(CH_2)_nCO_2R_2]_2$ (IV)

$(R_1)_2Sn(C_4H_2O_4)$ (V)

$(C_4H_9Sn)_2S_3$ (VI)

dans lesquelles $R_1$ représente un radical alkyle linéaire ou ramifié et contenant de 4 à 12 atomes de carbone, $R_2$ représente un radical alkyle linéaire ou ramifié et contenant de 4 à 18 atomes de carbone et n prend la valeur 1 ou 2.

Les composés de formule I sont connus, ayant été décrits dans les brevets français n[os] 2.239.496, 2.405.937, 2.405.974 et 2.407.236 et dans la demande de brevet français n° 7.829.623, et sont préparés par les méthodes décrites dans lesdits brevets et demande de brevet.

Les composés de formule II, III, IV, V et VI sont également connus et sont disponibles sur le marché des produits chimiques.

On sait que les résines vinyliques ont tendance à se dégrader à la chaleur et qu'il est indispensable d'introduire dans ces masses de matière synthétique des agents stabilisants en vue d'en retarder la dégradation thermique, et donc la coloration. On sait également que les résines vinyliques peuvent se dégrader sous l'influence de la lumière solaire et qu'une modification de la coloration originale de la résine peut en résulter. Ce problème est particulièrement crucial dans le cas des emballages alimentaires car l'on conçoit aisément que l'on ne pourrait commercialiser des aliments dans un emballage dont la coloration varie au cours du temps. C'est la raison pour laquelle il est intéressant d'utiliser des stabilisants thermiques qui sont également photostabilisants.

Les dihydropyridines de formule I possèdent ces deux propriétés à un degré intéressant et, de plus, montrent des propriétés antioxydantes très valables, supérieures à celles des phénols, lesquels sont généralement utilisés comme antioxydants dans les résines vinyliques, tel par exemple le di-t-butyl-2,6-méthyl-4 phénol.

D'après le brevet français n° 2.239.496, les dihydropyridines de formule I sont utilisées pour stabiliser les résines vinyliques à raison de 0,2 à 1,5 % en poids par rapport à la résine.

Les composés de formules II, III, IV, V et VI sont également connus comme stabilisants thermiques des résines vinyliques et sont généralement utilisés à raison de 0,3 à 3 % en poids par rapport à la résine, essentiellement de 1,0 à 3 %.

On a découvert, de manière surprenante, qu'en associant un composé organostannique et un dérivé de dihydropyridine de formule I, l'on obtenait une synergie du pouvoir stabilisant de chacune des molécules de l'invention.

Cette constatation est importante car elle permet d'envisager l'utilisation, à pouvoir stabilisant égal, de quantités de chaque constituant inférieures lorsqu'ils sont utilisés ensemble que lorsqu'ils sont utilisés séparément.

Cette possibilité d'utiliser des taux inférieurs de stabilisant est particulièrement intéressante dans le cas des résines destinées à la fabrication d'emballages alimentaires : elle permet de diminuer le prix de revient de l'emballage, essentiellement par la diminution des organostanniques, produits très coûteux, et également de réduire les risques de passage du stabilisant dans les aliments.

On a trouvé, de plus, que l'emploi de telles associations permet de réduire le taux de zinc dans les résines contenant comme stabilisants primaires des sels de calcium et de zinc, sans pour cela diminuer la stabilisation de la résine. Or, l'on sait qu'une trop forte proportion en zinc provoque l'apparition de défauts dans la résine.

Un autre avantage du procédé de stabilisation selon l'invention réside dans le fait qu'il allonge le temps de collage des résines vinyliques lors de leur mise en œuvre.

Cette propriété est importante car elle facilite le passage de la résine sur les machines industrielles pour la phase d'extrusion-soufflage. De plus, cette propriété permet de diminuer le taux des lubrifiants internes et externes dans les résines, agissant à nouveau favorablement sur le prix de revient.

L'allongement du temps de collage est toujours supérieur à 10 % et peut dépasser 60 % par rapport au temps de collage d'une résine stabilisée avec un dérivé organostannique seul.

On a également remarqué que les associations employées selon l'invention possèdent un pouvoir photostabilisant important, provoquant un ralentissement et, à certaines concentrations, une inhibition du brunissement de la résine provoqué par la lumière. Elles sont, à ce point de vue, supérieures aux stabilisants organostanniques utilisés seuls.

Les associations employées selon l'invention, indépandemment de leur action sur la stabilité thermique et sur la photostabilité des résines, améliorant la coloration originale et la transparence de celles-ci, ainsi que la stabilité de leur couleur.

Il s'agit là d'un avantage supplémentaire sur l'emploi des stabilisants usuels, surtout lorsqu'il s'agit de stabiliser des emballages alimentaires.

Par ailleurs, on a pu montrer que l'emploi de telles associations permet de réduire dans les résines de chlorure de vinyle (polymères ou copolymères) les quantités d'écran protecteur des rayons ultra-violets, ou même de les supprimer, ce qui représente un avantage économique certain.

De plus cet échange, ou remplacement, a un effet bénéfique sur la stabilité thermique des résines concernées.

Enfin, on sait d'après les brevets et demande de brevet ci-dessus que les composés de formule I ont une faible toxicité aiguë, la $DL_{50}$ dépassant 2 g/kg par voie orale chez la souris. Quant aux stabilisants organostanniques, on sait depuis longtemps qu'ils ont une faible toxicité.

Il en résulte que les associations employées selon l'invention ne poseront pas de problème de toxicité et que leur utilisation pour la stabilisation des emballages alimentaires peut être envisagée.

L'étude expérimentale du procédé de stabilisation selon l'invention a permis de montrer que :

— les constituants de ces associations sont compatibles entre eux et avec les résines vinyliques (homo- et copolymères) ;

— les associations manifestent une synergie de l'activité thermostabilisante de leurs constituants et/ou une synergie par l'allongement très significatif du temps de collage des résines lors de leur mise en œuvre ;

— les associations stabilisent à la lumière le chlorure de polyvinyle et ses copolymères et ont pour effet d'améliorer la couleur initiale des échantillons, par rapport aux échantillons stabilisés uniquement avec un composé organostannique ;

— les associations permettent de réduire les quantités de stabilisant organostannique d'une part, et de réduire ou de supprimer les quantitiés d'écran protecteur des rayons ultra-violets d'autre part.

Pour la facilité de présentation des résultats, on a désigné comme suit les composés formant les associations selon l'invention :

Composés de formule I

Diméthyl-2,6 dihydro-1,4 pyridines substituées en 3 et 5 par deux groupes :

| | |
|---|---|
| méthoxy-carbonyles | L 28504 |
| dodécyloxy-carbonyles | L 28507 |
| allyloxy-carbonyles | L 28511 |
| benzyloxy-carbonyles | L 28512 |
| propargyloxy-carbonyles | L 28513 |
| phénoxy-2' éthoxy-carbonyles | L 28588 |
| octadécyloxy-carbonyles | L 28599 |
| béhényloxy-carbonyles | L 28601 |
| octadécén-9 yloxy-carbonyles | L 28602 |
| palmityloxy-carbonyles | L 28603 |

Un composé de formule I dans laquelle R représente le radical alkylique du DOBANOL®23 (mélange d'alcools primaires contenant de 12 à 15 atomes de carbone et commercialisé par SHELL-CHIMIE) est représenté par le code L 28597 tandis que le code L 28604 correspond à un composé de formule I dans laquelle R représente le radical alkylique de l'ALFOL®10-14 (mélange d'alcools primaires contenant de 10 à 14 atomes de carbone et commercialisé par CONDEA-CHIMIE).

Composés organostanniques

| | |
|---|---|
| Maléate de dibutylétain | 1 |
| di-(n-butyl) stanno bis-(mercaptopropionate d'éthyl-2 hexyle) | 2 |
| di-(n-butyl) stanno bis-(mercaptopropionate de n-octyle) | 3 |

| | |
|---|---|
| di-(n-octyl) stanno bis-(mercaptoacétate de n-octyle) | 4 |
| di-(n-octyl) stanno bis-(mercaptoacétate d'isooctyle) | 5 |
| di-(n-octyl) stanno bis-(mercaptopropionate d'isooctyle) | 6 |
| Thia-6 distanna-5,7 dithio-5,7 undécane | 7 |

Les associations employées selon l'invention sont utilisées à raison de 0,2 à 1,5 partie par 100 parties de résine en poids, le composé de formule I étant utilisé à raison de 0,01 à 0,5 partie, essentiellement de 0,01 à 0,3 partie, et le stabilisant organostannique à raison de moins de 1 partie, fréquemment moins de 0,5 partie.

A. Compatibilité des composés de formule I et des stabilisants organostanniques.

On a tout d'abord vérifié la parfaite compatibilité des dihydropyridines de formule I et des composés organostanniques dans les résines vinyliques. Pour cela, on a montré que l'incorporation dans une résine vinylique d'un stabilisant de formule I et d'un stabilisant organostannique augmentait la stabilisation de ladite résine.

L'étude de la stabilisation thermique de la résine ci-dessous a été réalisée selon la méthode de GARDNER, décrite dans le brevet français n° 2.273.841.

a) Résine de chlorure de polyvinyle

| Ingrédients | Parties en poids |
|---|---|
| Chlorure de polyvinyle (LACQVYL® SO71/S de ATO-CHIMIE) | 100 |
| Résine acrylique | 1 |
| Phtalate d'alcools gras | 0,8 |
| Cire de paraffine | 0,6 |
| Paraffine oxydée | 0,4 |
| Ester octadécylique de l'acide β(ditertiobutyl)-3',5' hydroxy-4' phényl)propionique | 0,1 |
| Stabilisant organostannique | 0,3 à 1 |
| Stabilisant de formule I | 0,1 à 0,4 |

Les bandes de stabilité ont été maintenues en étuve ventilée à 210 °C pendant 0, 3, 6, 9, 12 et 15 minutes, et leur coloration a été chiffrée dans l'échelle GARDNER.

On a obtenu les résultats suivants :

| L 28507 conc. | 1 conc. | Temps en minutes 0 | 3 | 6 | 9 | 12 | 15 |
|---|---|---|---|---|---|---|---|
| - | 1 | 6 | 6 | 6 | 6 | 6 | |
| 0,2 | 0,8 | 4 | 4 | 4 | 4 | 5 | |
| 0,4 | 0,6 | 4 | 4 | 4 | 4 | 5 | |
| 0,2 | 0,3 | 5 | 5 | 5 | 7 | 11 | |
| 0,1 | 0,4 | > 4 | >4 | > 4 | >4 | 6 | |
| - | 0,5 | 11 | 11 | 11 | 11 | 13 | |

(Voir tableau, page 5)

| L 28504 conc. | 2 conc. | Temps en minutes 0 | 3 | 6 | 9 | 12 | 15 |
|---|---|---|---|---|---|---|---|
| - | 1 | 10 | 10 | 10 | 10 | < 11 | 12 |
| 0,2 | 0,8 | 3 | 3 | 3 | > 3 | 4 | 5 |
| 0,4 | 0,6 | 3 | 3 | 3 | 3 | 4 | < 5 |
| 0,2 | 0,3 | 3 | 3 | 3 | 4 | 5 | 10 |
| 0,1 | 0,4 | 4 | 4 | 4 | < 4 | 8 | > 10 |
| - | 0,5 | 9 | 9 | 9 | 10 | 12 | 15 |

Les résultats ci-dessus montrent la parfaite compatibilité des composés de formule I et des composés organostanniques (puisque l'addition d'une certaine quantité de dihydropyridine améliore la stabilisation de la résine).

Le même essai a été réalisé avec un autre stabilisant organostannique, le SS' bis (éthyl-2 hexyl mercaptopropionate) de di-n-butyl étain (stabilisant 2) et avec la résine suivante :

| Ingrédients | Parties en poids |
|---|---|
| Chlorure de polyvinyle (SF 590) | 100 |
| Agent anti-choc | 10 |
| Résine acrylique | 1,5 |
| Huile de soja époxydée | 0,5 |
| Huile de ricin hydrogénée | 1,2 |
| Cire de polyéthylène | 0,45 |
| Stéarate de calcium | 0,2 |
| SL 2016 | 0,05 |
| Stabilisant de formule I | 0 à 0,4 |
| Stabilisant organostannique | 0,75 à 1,5 |

Le SL 2016 est une solution d'éthyl-2 hexanoate de zinc dans un mélange d'hydrocarbures aromatiques bouillant de 158 °C à 184 °C.

Les résultats ci-dessous ont été obtenus à 210 °C.

| L 28504 conc. | 2 conc. | Temps en minutes 0 | 3 | 6 | 9 | 12 | 15 |
|---|---|---|---|---|---|---|---|
| - | 1,5 | < 1 | < 1 | < 1 | 1 | 2 | 2 |
| 0,4 | 0,75 | 1 | 1 | 1 | > 1 | > 2 | > 2 |
| 0,2 | 0,75 | 1 | 1 | 1 | > 1 | 2 | 3 |
| - | 1,5 | < 1 | < 1 | < 1 | 1 | 2 | 3 |
| 0,3 | 0,75 | 1 | 1 | 1 | 2 | 2 | 3 |
| 0,1 | 0,75* | 1 | 1 | 1 | 2 | 2 | 3 |
| - | 1,5 | < 1 | < 1 | < 1 | 2 | 2 | 2 |
| 0,3 | 0,75 | 1 | 1 | 1 | > 1 | 2 | 5 |
| 0,1 | 0,75 | < 1 | < 1 | 1 | 1 | 2 | 6 |

* avec 0,005 de SL 2016

Ces résultats confirment la bonne compatibilité des composés de formule I et des dérivés organostanniques dans le chlorure de polyvinyle.

2) Copolymère chlorure de polyvinyle-acétate de polyvinyle

De la même manière que ci-dessus, on a montré la compatibilité des constituants des associations employées selon l'invention dans les copolymères vinyliques.

La résine ci-dessous a été utilisée :

| Ingrédients | Parties en poids |
|---|---|
| Chlorure de vinyle-acétate de vinyle (LUCOVYL®MA 6035 De RHONE-POULENC) | 65 |
| Chlorure de vinyle-acétate de vinyle (LUCOVYL®GA 8502 de RHONE-POULENC) | 25 |
| Chlorure de polyvinyle (LUCOVYL®MB 1000 de RHONE-POULENC) | 10 |
| Stéarate de calcium | 0,30 |
| Cire de polyéthylène | 0,10 |
| Stabilisants | 0,1 à 0,2 |

Le stabilisant organostannique est le SS'bis(octyl mercaptoproprionate) de di-n-butyl étain (stabilisant 3)

Les bandes de stabilité sont maintenues dans une étuve ventilée à 185 °C pendant 0, 2, 4, 6, 8, 10, 12, 14 et 16 minutes et leur coloration a été chiffrée selon l'échelle GARDNER.

On a obtenu les résultats ci-dessous, avec une concentration de 0,1 partie de chaque constituant de l'association.

| Stabilisants | | Temps en minutes | | | | | | | | |
|---|---|---|---|---|---|---|---|---|---|---|
| | | 0 | 2 | 4 | 6 | 8 | 10 | 12 | 14 | 16 |
| L 28504 | 3 | 1 | 1 | 1 | < 2 | > 2 | 10,5 | 15 | 17 | 18 |
| L 28507 | 3 | 1 | 1 | 1 | > 1 | > 2 | 15 | 15 | 17 | 18 |
| L 28511 | 3 | 1 | 1 | 1 | 1 | < 2 | 10,5 | 11 | 15 | 18 |
| L 28512 | 3 | 1 | 1 | 1 | 1 | 2 | 10 | 11 | 18 | 18 |
| L 28513 | 3 | 1 | 1 | 1 | 2 | < 3 | 10 | 14 | 15 | 18 |
| L 28588 | 3 | 1 | 1 | 1 | > 1 | < 2 | > 4 | > 11 | 17 | 18 |
| L 28597 | 3 | 1 | 1 | 1 | 1 | < 2 | > 4 | > 11 | 17 | 18 |
| L 28599 | 3 | 1 | 1 | 1 | 1 | < 2 | < 5 | 11 | 17 | 18 |
| L 28601 | 3 | 1 | 1 | 1 | 1 | < 2 | 5 | 11 | 17 | 18 |
| L 28603 | 3 | 1 | 1 | 1 | 1 | < 2 | 11 | 15 | 17 | 18 |
| - | 3 | 1 | 1 | 1 | 3 | 4 | 15 | 15 | 17 | 18 |

Ces résultats montrent bien la compatibilité des constituants des associations employées selon l'invention dans les copolymères vinyliques.

B. Etude de la stabilisation thermique des résines vinyliques selon l'invention.

L'étude de la stabilisation thermique a été effectuée selon la méthode de GARDNER déjà mentionnée.

1) Stabilisation du chlorure de polyvinyle.

On a montré qu'il était possible d'améliorer la stabilisation thermique des résines ci-dessous tout en

diminuant la teneur en stabilisant organostannique mais en ajoutant une certaine quantité d'une dihydropyridine de formule I, et ce quelle que soit la teneur en huile de soja époxydée.

Le premier essai a été effectué avec la résine suivante :

| Ingrédients | Parties en poids |
|---|---|
| Chlorure de polyvinyle (LACQVYL®S 071/S de ATO-CHIMIE) | 100 |
| Agent anti-choc | 10 |
| Huile de ricin hydrogénée | 1,2 |
| Trimontanate de glycéryle | 0,4 |
| Stéarate de calcium | 0,3 |
| Huile de soja époxydée | 0,5 ou 5 |
| Stabilisant organostannique | 0,3 ou 0,5 |
| Stabilisant de formule I | 0 ou 0,2 |

Les résultats ci-dessous ont été obtenus à 210 °C et avec le stabilisant 4 :

| | | | | | | | | | | | | | |
|---|---|---|---|---|---|---|---|---|---|---|---|---|---|
| Concentration | | | Temps en minutes | | | | | | | | | | |
| L28504 | 4 | Huile de soja épox. | 0 | 3 | 6 | 9 | 12 | 15 | 18 | 21 | 24 | 27 | 30 |
| - | 0,5 | 0,5 | 1 | 1 | 1 | 3 | >4 | 11 | noir | | | | |
| 0,2 | 0,5 | 0,5 | 1 | 1 | 1 | <2 | >2 | 4 | noir | | | | |
| 0,2 | 0,3 | 0,5 | 1 | 1 | 1 | 2 | 3 | >4 | 9 | noir | | | |
| - | 0,5 | 5 | 1 | 1 | 1 | >1 | 2 | >2 | 3 | 8 | <11 | 13 | 13 |
| - | 0,3 | 5 | 1 | 1 | 1 | >1 | 2 | 3 | >4 | 10 | 14 | 14 | noir |
| 0,2 | 0,3 | 5 | 1 | 1 | 1 | >1 | <2 | <3 | >3 | 4 | 5 | 9 | noir |
| 0,2 | 0,5 | 5 | 1 | 1 | 1 | >1 | >1 | 2 | >2 | <3 | 3 | 4 | 6 |
| L28507 | 4 | Huile de soja épox. | | | | | | | | | | | |
| 0,2 | 0,3 | 0,5 | 1 | 1 | >1 | <3 | <5 | 9 | noir | | | | |
| 0,2 | 0,5 | 0,5 | 1 | 1 | >1 | 2 | >3 | >4 | 8,5 | noir | | | |
| 0,2 | 0,3 | 5 | 1 | 1 | 1 | >1 | >2 | 3 | 4 | 8 | 8 | 14 | noir |
| 0,2 | 0,5 | 5 | 1 | 1 | 1 | >1 | >1 | >2 | 3 | >4 | 8,5 | 11 | 14 |

Le même essai a été réalisé avec le chlorure de polyvinyle SOLVIC® 258 RD de SOLVAY.

| | | | | | | | | | | | | | |
|---|---|---|---|---|---|---|---|---|---|---|---|---|---|
| Concentration | | | Temps en minutes | | | | | | | | | | |
| L28507 | 4 | Huile de soja épox. | 0 | 3 | 6 | 9 | 12 | 15 | 18 | 21 | 24 | 27 | 30 |
| - | 0,5 | 0,5 | 1 | 1 | >2 | 7,5 | 12 | noir | | | | | |
| 0,2 | 0,5 | 0,5 | 1 | 1 | >2 | <3 | <4 | noir | | | | | |
| 0,2 | 0,3 | 0,5 | 1 | 1 | >2 | 3 | 4 | noir | | | | | |

(Suite)

| Concentration | | | Temps en minutes | | | | | | | | | | |
|---|---|---|---|---|---|---|---|---|---|---|---|---|---|
| L28507 | 4 | Huile de soja épox. | 0 | 3 | 6 | 9 | 12 | 15 | 18 | 21 | 24 | 27 | 30 |
| - | 0,5 | 5 | 1 | 1 | 3 | 6 | 8 | 11 | 13 | 15 | 15 | noir | |
| 0,2 | 0,5 | 5 | 1 | 1 | <3 | 3 | <4 | 4 | 4 | 10 | >11 | noir | |
| 0,2 | 0,3 | 5 | 1 | >1 | 4 | 4 | <4 | >4 | 8,5 | >11 | 14 | noir | |

On a également réalisé d'autres essais avec la résine ci-dessous :

| Ingrédients | Parties en poids |
|---|---|
| Chlorure de polyvinyle (LACQVYL® SO71/S de ATO-CHIMIE) | 100 |
| Agent anti-choc | 10 |
| Huile de ricin hydrogénée | 1,2 |
| Trimontanate de glycéryle | 0,4 |
| Stéarate de calcium | 0,3 |
| Huile de soja époxydée | 0,5 ou 5 |
| Stabilisant organostannique | 0,3 ou 0,5 |
| Stabilisant de formule I | 0 ou 0,2 |

Les résultats ci-dessous ont été obtenus à 210 °C.

| Stabilisant de formule I | 4 conc. | Huile de soja époxy. conc. | Temps en minutes 0 | 3 | 6 | 9 | 12 | 15 | 18 | 21 | 24 | 27 | 30 |
|---|---|---|---|---|---|---|---|---|---|---|---|---|---|
| - | 0,5 | 0,5 | 1 | 1 | 1 | >1 | <3 | 8 | noir | | | | |
| L28504 | 0,3 | 0,5 | 1 | 1 | 1 | >1 | 3 | 4 | noir | | | | |
| L28511 | 0,3 | 0,5 | 1 | 1 | >1 | >2 | 4 | >4 | noir | | | | |
| L28513 | 0,3 | 0,5 | 1 | 1 | 1 | >1 | <3 | 4 | noir | | | | |
| - | 0,5 | 5 | 1 | 1 | 1 | 1 | 2 | <3 | 4 | 5 | 10 | 14 | noir |
| L28504 | 0,3 | 5 | 1 | 1 | 1 | 1 | >2 | <3 | 3 | 4 | 4 | 7 | noir |
| L28511 | 0,3 | 5 | 1 | 1 | 1 | >1 | <3 | 4 | >4 | >4 | >4 | <10 | noir |
| L28513 | 0,3 | 5 | 1 | 1 | 1 | 1 | >2 | <3 | >3 | >3 | >4 | 7 | noir |
| - | 0,5 | 0,5 | 1 | 1 | 1 | >1 | <3 | 8 | noir | | | | |
| L28512 | 0,3 | 0,5 | 1 | 1 | 1 | 2 | <4 | >4 | noir | | | | |
| L28588 | 0,3 | 0,5 | 1 | 1 | 1 | 2 | 4 | >4 | noir | | | | |
| L28597 | 0,3 | 0,5 | 1 | 1 | <2 | <3 | 4 | >4 | noir | | | | |
| L28601 | 0,3 | 0,5 | 1 | 1 | 2 | 4 | >4 | 8 | noir | | | | |
| L28602 | 0,3 | 0,5 | 1 | 1 | >1 | <4 | >4 | 15 | noir | | | | |

(Suite)

| Stabilisant de formule I | 4 conc. | Huile de soja époxy. conc. | Temps en minutes 0 | 3 | 6 | 9 | 12 | 15 | 18 | 21 | 24 | 27 | 30 |
|---|---|---|---|---|---|---|---|---|---|---|---|---|---|
| - | 0,5 | 5 | 1 | 1 | 1 | 1 | 2 | <3 | 4 | 5 | 10 | 14 | noir |
| L28512 | 0,3 | 5 | 1 | 1 | 1 | >1 | <3 | <3 | >4 | >4 | 8,5 | 11 | noir |
| L28588 | 0,3 | 5 | 1 | 1 | 1 | 1 | >2 | 3 | 4 | >4 | >4 | 11 | noir |
| L28601 | 0,3 | 5 | 1 | 1 | 1 | 2 | 3 | 4 | 7 | 7 | 7 | <13 | noir |
| L28602 | 0,3 | 5 | 1 | 1 | 1 | >2 | 4 | 5 | 7 | >11 | 14 | 15 | noir |
| - | 0,5 | 5 | 1 | 1 | 1 | >1 | >1 | 2 | >4 | 8 | <12 | <13 | noir |
| L28597 | 0,5 | 5 | 1 | 1 | 1 | >1 | >2 | <3 | >4 | <6 | 11 | 15 | noir |

D'après ces résultats, on peut dire que la plupart des associations ci-dessus se montrent nettement supérieures au stabilisant organostannique utilisé seul, et ce quelle que soit la concentration en huile de soja époxydée. Les associations qui se montrent équivalentes au point de vue effet thermostabilisant possèdent au moins l'avantage de permettre d'abaisser le taux de stabilisant organostannique, celui-ci étant notablement plus cher que les dérivés de dihydropyridine.

On a enfin montré que la supériorité des associations employées selon l'invention provenait de la synergie du pouvoir thermostabilisant de chacun de leurs constituants.

On a déjà montré que les associations employées selon l'invention étaient supérieures aux stabilisants organostanniques utilisés seuls. Il suffit donc de montrer qu'elles sont également supérieures aux dérivés de formule I utilisés seuls. Pour cela, on a comparé l'action stabilisante des composés de formule I à celle du composé organostannique utilisé ci-dessus (composé n° 4) et l'on a trouvé que les composés de formule I sont de moins bons stabilisants que le di-(n-octyl) stanno bis (mercaptoacétate de n-octyle) (composé 4), et donc sont de moins bons stabilisants que les associations employées selon l'invention.

Ces essais ont été effectués avec la résine ci-dessous :

| Ingrédients | Parties en poids |
|---|---|
| Chlorure de polyvinyle (LACQVYL® SO71/S de ATO-CHIMIE) | 100 |
| Agent anti-choc | 10 |
| Huile de ricin hydrogénée | 1,2 |
| Trimontanate de glycéryle | 0,4 |
| Stéarate de calcium | 0,3 |
| Huile de soja époxydée | 0,5 ou 5 |
| Stabilisant | 0,5 |

Les résultats ci-dessous ont été obtenus à 210 °C :

| Stabilisant de formule I | 4 conc | Huile de soja époxy. conc. | Temps en minutes 0 | 3 | 6 | 9 | 12 | 15 | 18 | 21 | 24 | 27 |
|---|---|---|---|---|---|---|---|---|---|---|---|---|
| - | 0,5 | 0,5 | 1 | 1 | 1 | 1 | >1 | >5 | 8,5 | noir | | |
| L28504 | - | 0,5 | 1 | 1 | >1 | 3 | 7,5 | 11 | noir | | | |
| L28511 | - | 0,5 | 1 | 1 | >1 | >3 | 8 | 10,5 | noir | | | |
| L28512 | - | 0,5 | 1 | 1 | >1 | >3 | 10 | >11 | noir | | | |
| L28513 | - | 0,5 | 1 | 1 | >1 | 3 | >5 | 10,5 | noir | | | |

(Suite)

| Stabilisant de formule I | Stabilisant 4 conc | Huile de soja épox. conc. | Temps en minutes 0 | 3 | 6 | 9 | 12 | 15 | 18 | 21 | 24 | 27 |
|---|---|---|---|---|---|---|---|---|---|---|---|---|
| L28588 | - | 0,5 | 1 | 1 | >1 | 5 | 15 | noir | | | | |
| L28597 | - | 0,5 | 1 | 1 | > 2 | > 5 | 15 | noir | | | | |
| - | 0,5 | 5 | 1 | 1 | 1 | 1 | > 1 | < 2 | 9 | 9 | 13 | noir |
| L28504 | - | 5 | 1 | 1 | 1 | 1 | > 1 | 3 | 10 | 10 | 14 | noir |
| L28511 | - | 5 | 1 | 1 | 1 | 1 | < 2 | 3 | 8 | 10 | 15 | noir |
| L28512 | - | 5 | 1 | 1 | 1 | 1 | 2 | > 3 | 8 | >11 | 15 | noir |
| L28513 | - | 5 | 1 | 1 | 1 | 1 | < 2 | > 3 | 8,5 | >11 | >11 | noir |
| L28588 | - | 5 | 1 | 1 | 1 | 1 | > 2 | > 4 | 15 | 15 | 18 | noir |
| L28597 | - | 5 | 1 | 1 | 1 | 1 | < 3 | > 5 | 14 | 18 | noir | |

L'ensemble des résultats ci-dessus montre clairement la supériorité des associations employées selon l'invention sur chacun des constituants des associations, pris isolément.

2) Stabilisation des copolymères du chlorure de polyvinyle.

L'étude de la stabilisation des copolymères du chlorure de vinyle a été réalisée en mettant en évidence l'allongement du temps de collage du copolymère sur le matériel de mise en œuvre.

Il est avantageux en effet de disposer de résines ne collant pas trop vite sur le matériel de mise en œuvre, par exemple le copolymère de chlorure de vinyle et d'acétate de vinyle entrant dans la fabrication des disques ne doit pas coller trop vite.

Les essais ont été réalisés avec la résine suivante :

| Ingrédients | Parties en poids |
|---|---|
| Chlorure de vinyle-acétate de vinyle (LUCOVYL® MA 6035 de RHONE-POULENC) | 65 |
| Chlorure de vinyle-acétate de vinyle (LUCOVYL® GA 8502 de RHONE-POULENC) | 25 |
| Chlorure de polyvinyle (LUCOVYL® LB 1000 de RHONE-POULENC) | 10 |
| Stéarate de calcium | 0,30 |
| Résine acrylique | 0 à 0,20 |
| Cire de polyéthylène | 0,1 |
| Stabilisant de formule I | 0 à 0,3 |
| Stabilisant organostannique 3 | 0 à 0,3 |

Définition de l'essai

La résine ci-dessus est malaxée puis calandrée dans un intervalle de température allant de 130 à 175 °C, la feuille formée étant laissée en contact avec les cylindres jusqu'à collage.

Les résultats obtenus sont repris dans le tableau ci-dessus pour le L 28504 et le composé 3.

(Voir tableau, page 11)

| L 28504 conc. : | Stabilisant n° 3 conc. : | Résine acrylique conc. : | Temps de collage (minutes, secondes) |
|---|---|---|---|
| - | 0,2 | - | 17 |
| 0,2 | - | - | 9,45 |
| 0,1 | 0,1 | - | 23,30 |
| 0,12 | 0,08 | - | 24 |
| - | 0,25 | - | 18,50 |
| 0,25 | - | - | 9,15 |
| 0,10 | 0,15 | - | 25,15 |
| - | 0,3 | - | 18,50 |
| 0,3 | - | - | 11,45 |
| 0,12 | 0,18 | - | 21 |
| 0,2 | - | 0,10 | 11,45 |
| 0,13 | 0,07 | 0,10 | 24 |
| 0,10 | 0,10 | 0,10 | 31 |
| 0,08 | 0,12 | 0,10 | 24 |
| 0,20 | - | 0,20 | 12 |
| - | 0,20 | 0,20 | 17,30 |
| 0,13 | 0,07 | 0,20 | 21 |
| 0,10 | 0,10 | 0,20 | 30 |
| 0,08 | 0,12 | 0,20 | 24 |
| - | 0,225 | 0,10 | 17,35 |
| 0,225 | - | 0,10 | 9,30 |
| 0,150 | 0,075 | 0,10 | 24,30 |
| - | 0,225 | 0,20 | 17,15 |
| 0,225 | - | 0,20 | 9,45 |
| 0,150 | 0,075 | 0,20 | 22 |

D'autres associations ont été testées avec la résine ci-dessous :

| Ingrédients | Parties en poids |
|---|---|
| Chlorure de vinyle-acétate de vinyle (LUCOVYL MA 6035 de RHONE-POULENC) | 65 |
| Chlorure de vinyle-acétate de vinyle (LUCOVYL® GA 8502 de RHONE-POULENC) | 25 |
| Chlorure de polyvinyle (LUCOVYL® MB 1000 de RHONE-POULENC) | 10 |
| Stéarate de calcium | 0,30 |
| Résine acrylique | 0 ou 0,20 |
| Cire de polyéthylène | 0,1 |
| Stabilisant de formule I | 0 à 0,20 |
| Stabilisant organostannique 3 | 0 à 0,20 |

Les résultats ci-dessous ont été obtenus :

| Composé de formule I | Concentration | Stabilisant 3 conc. | Temps de collage (minutes, secondes) |
|---|---|---|---|
| - | - | 0,20 | 17 |
| L 28507 | 0,20 | - | 10,30 |
| | 0,10 | 0,10 | 22,45 |
| L 28511 | 0,20 | - | 10 |
| | 0,10 | 0,10 | 24 |
| L 28512 | 0,20 | - | 9,45 |
| | 0,10 | 0,10 | 21,15 |
| L 28513 | 0,20 | - | 10,10 |
| | 0,10 | 0,10 | 19,45 |
| L 28588 | 0,20 | - | 9,30 |
| | 0,10 | 0,10 | 22 |
| L 28597 | 0,20 | - | 10,30 |
| | 0,10 | 0,10 | 21,30 |
| L 28601 | 0,20 | - | 10,50 |
| | 0,10 | 0,10 | 21 |
| L 28602 | 0,20 | - | 9 |
| | 0,10 | 0,10 | 20,10 |
| L 28604 | 0,20 | - | 9,50 |
| | 0,10 | 0,10 | 18 |

Le tableau ci-dessus montre clairement la synergie du pouvoir stabilisant des composés formant les associations employées selon l'invention.

On a également montré la synergie avec la résine ci-dessous :

| Ingrédients | Parties en poids |
|---|---|
| Chlorure de vinyle-acétate de vinyle (VINNOL H13/50S de WACKER) | 100 |
| Stéarate de calcium | 0,30 |
| Cire de polyéthylène | 0,10 |
| Tribéhénate de glycéryle | 0,20 |
| Stabilisant de formule I | 0 à 0,25 |
| Stabilisant organostannique 3 | 0 à 0,25 |

Les résultats ci-dessous ont été obtenus :

| Stabilisant de formule I | Concentration | Stabilisant 3 conc. | Temps de collage (minutes, secondes) |
|---|---|---|---|
| - | - | 0,25 | 14,45 |
| L 28504 | 0,25 | - | 7 |
| | 0,05 | 0,20 | 16 |
| L 28507 | 0,25 | - | 7,20 |
| | 0,05 | 0,20 | 15 |
| L 28511 | 0,25 | - | 7,15 |
| | 0,05 | 0,20 | 15,30 |

3) Etude de la stabilisation de la couleur initiale des résines vinyliques

Les associations employées selon l'invention non seulement améliorent la stabilisation de la couleur initiale des résines vinyliques, mais permettent également d'obtenir une stabilisation équivalente en utilisant beaucoup moins de stabilisants organostanniques, produits très chers.

a) Stabilisation du chlorure de polyvinyle

Des essais de stabilisation identique aux précédents ont été réalisés à 210 °C avec la résine ci-dessous :

| Ingrédients | Parties en poids |
|---|---|
| Chlorure de polyvinyle (LACQVYL® S071/S de ATO-CHIMIE) | 100 |
| Agent anti-choc | 8 |
| Résine acrylique | 5 |
| Stéarate de calcium | 0,2 |
| Huile de ricin hydrogénée | 1,2 |
| Trimontanate de glycéryle | 0,4 |
| Stabilisant de formule I | 0 à 0,2 |
| Stabilisant organostannique | 0,4 à 1 |

On a obtenu les résultats ci-dessous :

| L 28507 conc. | Stabil.4 conc. | Temps en minutes | | | | | | | |
|---|---|---|---|---|---|---|---|---|---|
| | | 0 | 3 | 6 | 9 | 12 | 15 | 18 | 21 |
| - | 1 | 1 | 1 | 1 | 2 | 4 | 7 | 12 | noir |
| 0,2 | 0,8 | 1 | 1 | 1 | 2 | < 5 | 9 | 10 | noir |
| - | 0,5 | 1 | 1 | 1 | 5 | 11 | 18 | noir | |
| 0,1 | 0,4 | 1 | 1 | 1 | 5 | 10 | 17 | noir | |

On a réalisé des essais comparables en étuve ventilée, à 210 °C, avec la résine ci-dessous :

| Ingrédients | Parties en poids |
|---|---|
| Chlorure de polyvinyle (SOLVIC® 223 de SOLVAY) | 100 |
| Agent anti-choc | 8 |
| Résine acrylique | 0,5 |
| Stéarate de calcium | 0,2 |
| Huile de ricin hydrogénée | 1,2 |
| Trimontanate de glycéryle | 0,4 |
| Stabilisant de formule I | 0 à 0,2 |
| Stabilisant organostannique 6 | 0,4 à 0,8 |

On a obtenu les résultats ci-dessous :

| L 28504 conc. | Stabil. 6 conc. | Temps en minutes | | | | | | |
|---|---|---|---|---|---|---|---|---|
| | | 0 | 3 | 6 | 9 | 12 | 15 | 18 |
| - | 0,8 | 1 | 1 | 2 | 2 | < 7 | < 11 | noir |
| 0,2 | 0,6 | 2 | 2 | 2 | 2 | > 4 | 7 | 11 |
| - | 0,6 | 1 | 1 | 1 | 3 | 6 | 17 | noir |

(Suite)

| L 28504 conc. | Stabil. 6 conc. | Temps en minutes | | | | | | |
|---|---|---|---|---|---|---|---|---|
| | | 0 | 3 | 6 | 9 | 12 | 15 | 18 |
| 0,1 | 0,5 | 2 | 2 | 2 | 4 | 7 | < 11 | noir |
| 0,2 | 0,4 | 2 | 2 | 2 | 4 | 6 | 10 | noir |
| - | 0,5 | 1 | 1 | 1 | 3 | 9 | 18 | noir |
| 0,1 | 0,4 | 1 | 1 | 2 | 3 | 6 | 10 | noir |

On a réalisé une autre série d'essais sur des résines de chlorure de polivinyle destinées à la fabrication de bouteilles d'eau minérale.

On a montré que l'addition d'un stabilisant de formule I à de telles résines, déjà stabilisées par un composé organostannique, augmente la stabilité de la couleur initiale bleu glacier, sans qu'il soit nécessaire d'ajouter du stéarate de zinc. Or, l'on sait qu'une trop forte concentration en zinc provoque l'apparition de défauts dans la résine.

Deux types d'essais ont été réalisés :

— la résine est malaxée sur un mélangeur à cylindre à 220 °C et l'on mesure le temps qui s'écoule jusqu'au premier changement visible de coloration ;

— fabrication par extrusion-soufflage sur machine HESTA d'un flacon cylindrique de 250 ml et l'on note la couleur du flacon après 1, 2 et 3 passages successifs de la résine sur la machine ;

La résine est du chlorure de polyvinyle stabilisé par un composé organostannique solide et un sel organique de calcium, dans laquelle l'on introduit de 0 à 0,05 partie d'un stabilisant de formule I.

Les résultats ci-dessous ont été obtenus avec 0,3 % du stabilisant 7 :

| Composants ajoutés | | | | |
|---|---|---|---|---|
| L 28504 conc. | - | 0,05 | - | 0,05 |
| Stéarate de zinc conc. | - | - | 0,05 | 0,05 |
| Stabilité de la couleur à 220°C (min.) | 2 à 3 | 6 | 2 à 3 | 6 |
| Couleur du flacon | | | | |
| 1er passage | bleu glacier | bleu clair vif | bleu glacier | bleu clair vif |
| 2ème passage | bleu faiblement verdâtre | bleu clair vif | bleu faiblement verdâtre | bleu clair vif |
| 3ème passage | verdâtre | bleu clair vif | verdâtre | bleu clair vif |

On a réalisé les mêmes essais avec la résine ci-dessous :

| Ingrédients | Parties en poids |
|---|---|
| Chlorure de polyvinyle (LACQVYL® S071/S de ATO-CHIMIE) | 100 |
| Agent anti-choc | 7 |

| | |
|---|---|
| Lubrifiants internes, externes et pigments | 3,5 |
| Stabilisant organostannique | 0,2 à 0,3 |
| Stabilisant de formule I | 0 à 0,1 |

On a obtenu les résultats ci-dessous avec le stabilisant n° 5 :

| Composants ajoutés conc. : | | | | | |
|---|---|---|---|---|---|
| L 28507 | - | 0,1 | 0,05 | 0,05 | 0,025 |
| Stabilisant | 0,3 | 0,3 | 0,3 | 0,2 | 0,3 |
| Stabilité de la couleur à 220°C (min.) | 2 | 5 | 4 | 4 | 3 |
| Couleur du flacon | | | | | |
| 1er passage | bleu glacier légèrement grisâtre | bleu glacier | bleu glacier | bleu glacier | bleu glacier |
| 2ème passage | bleu glacier légèrement verdâtre | bleu glacier | bleu glacier très lég. grisâtre | bleu glacier très lég.grisâtre | bleu glacier très lég.grisâtre |
| 3ème passage | bleu glacier verdâtre | bleu glacier | bleu glacier très lég. grisâtre | bleu glacier très lég.grisâtre | bleu glacier très lég.grisâtre |

Il est ainsi prouvé que l'emploi des associations considérées améliore la nuance initiale et la stabilité de la couleur : il n'est donc pas nécessaire d'ajouter du stéarate de zinc.

b) Copolymères du chlorure de polyvinyle

Dans le procédé selon l'invention, l'utilisation d'une association en lieu et place d'un stabilisant organostannique seul améliore nettement la couleur initiale des échantillons et permet d'abaisser la teneur en dérivé de l'étain.

Les essais ont été effectués à 185 °C avec la résine ci-dessous, préparée à 162 °C, et les colorations ont été exprimées selon l'échelle GARDNER :

| Ingrédients | Parties en poids |
|---|---|
| Chlorure de polyvinyle (SOLVIC® 258 RD de SOLVAY) | 90 |
| Chlorure de vinyle-chlorure de vinylidène (IXAN® SGA/1 de SOLVAY) | 10 |
| Agent anti-choc | 7 |
| Huile de soja époxydée | 0,5 |
| Stéarate de calcium | 0,2 |
| Huile de ricin hydrogénée | 1,2 |
| Trimontanate de glycéryle | 0,4 |
| Stabilisant de formule I | 0 à 0,25 |
| Stabilisant organostannique 5 | 0,25 à 0,50 |

On a obtenu les résultats ci-dessous :

| Stabilisant de formule I | conc. | Stabilisant 5 conc. | Temps en minutes | | | | | | | | |
|---|---|---|---|---|---|---|---|---|---|---|---|
| | | | 0 | 3 | 6 | 9 | 12 | 15 | 18 | 21 | 24 |
| - | - | 0,5 | >1 | <2 | >2 | 4 | >10 | 15 | 17 | >18 | noir |
| L 28504 | 0,25 | 0,25 | 1 | >1 | >2 | >3 | >7 | >11 | >17 | noir | |
| - | - | 0,5 | 1 | >1 | <3 | >3 | 9 | >11 | 15 | 18 | 18 |
| L 28511 | 0,25 | 0,25 | 1 | >1 | <3 | >3 | 6 | 9 | 10,5 | 15 | 18 |
| - | - | 0,5 | >1 | <2 | 2 | 3 | >4 | 14 | 15 | 18 | >18 |
| L 28512 | 0,25 | 0,25 | >1 | <2 | 2 | >3 | 7 | 10,5 | 13 | 18 | >18 |
| L 28513 | 0,25 | 0,25 | >1 | <2 | 2 | 3 | 4 | 8,5 | <12 | 18 | >18 |
| L 28507 | 0,25 | 0,25 | >1 | <2 | 2 | >3 | 6 | 11 | 18 | >18 | >18 |
| L 28597 | 0,25 | 0,25 | >1 | <2 | 2 | 3 | >7 | 11 | 17 | 18 | >18 |

4) Résultats de l'étude de photostabilisation

On a montré que selon le procédé de l'invention, la présence d'une association permet de remplacer tout ou partie de l'écran anti U. V. indispensable à la résine. Cet échange exerce à la fois un effet favorable sur la stabilité de la résine et sur le coût de la stabilisation.

L'effet anti U. V. des associations employées selon l'invention est mis en évidence dans les essais suivants, où l'on étudie la coloration des bandes de stabilité après des intervalles de temps allant de 0 à 24 minutes de séjour en étuve ventilée à 210 °C.

La résine ci-dessous a été utilisée :

| Ingrédients | Parties en poids |
|---|---|
| Chlorure de polyvinyle (LACQVYL® S071/S de ATO-CHIMIE) | 100 |
| Résine acrylique | 1 |
| Cire de paraffine | 0,6 |
| Phtalate d'alcools gras | 0,8 |
| Paraffine oxydée | 0,4 |
| Ester octaécylique de l'acide β-(ditertiobutyl-3',5' hydroxy-4' phényl)propionique | 0,1 |
| Azurant optique | 0,3 |
| Ecran ultra-violet | 0 à 0,3 |
| Stabilisant organostannique 1 | 2,5 |
| Stabilisant de formule I | 0 à 0,3 |

On a obtenu les résultats ci-dessous :

| L 28504 conc. | Stabilisant 1 conc. | Ecran U.V. conc. | Temps en minutes | | | | | | | | |
|---|---|---|---|---|---|---|---|---|---|---|---|
| | | | 0 | 3 | 6 | 9 | 12 | 15 | 18 | 21 | 24 |
| - | 2,5 | 0,3 | 1 | 1 | >1 | <2 | 3 | <5 | >5 | >11 | <14 |
| 0,2 | 2,5 | - | 1 | 1 | >1 | <2 | 3 | 5 | 6 | 12 | >18 |
| 0,3 | 2,5 | - | 1 | 1 | >1 | <2 | 3 | 5 | <6 | <12 | >18 |
| 0,15 | 2,5 | 0,15 | 1 | 1 | >1 | <2 | 3 | <5 | >5 | >11 | 18 |

Ce tableau montre bien l'effet anti U. V. des associations employées selon l'invention.

**Revendications**

1. Procédé pour améliorer la résistance à la dégradation par la chaleur et la lumière de résines vinyliques à base d'un ou plusieurs polymères et/ou copolymères de chlorure de vinyle, dans lequel on ajoute à la résine un stabilisant consistant en un diméthyl-2,6 dihydro-1,4 pyridine dicarboxylate-3,5 de formule

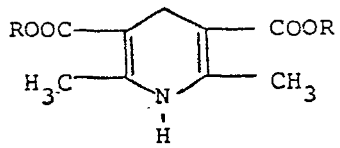

dans laquelle R représente un radical alcoyle linéaire en $C_1$ à $C_{22}$, un radical linéaire alcényle ou alcynyle en $C_3$ à $C_{18}$, un radical aralcoyle, éventuellement substitué en position ortho ou para par un atome d'halogène ou par un radical méthyle ou méthoxy, ou un radical $R_3$—O—$(CH_2)m$— dans lequel m prend la valeur 2, 3 ou 4 et $R_3$ représente un radical alcoyle linéaire en $C_1$ à $C_4$ ou un radical phényle, caractérisé en ce que l'on incorpore également à la résine un deuxième stabilisant choisi parmi les dérivés organostanniques répondant à l'une des formules générales

$(R_1)_2Sn(OCOR_2)_2$
$(R_1)_2Sn(SR_2)_2$
$(R_1)_2Sn\ [S(CH_2)_pCO_2R_2]_2$
$(R_1)_2Sn(C_4H_2O_4)$
$(C_4H_9Sn)_2S_3$

dans lesquelles $R_1$ représente un radical alcoyle linéaire ou ramifié en $C_4$ à $C_{12}$, $R_2$ désigne un radical alcoyle linéaire ou ramifié en $C_4$ à $C_{18}$ et p prend la valeur 1 ou 2, et que l'on utilise des proportions desdits stabilisants dihydropyridinique et organostannique telles que la résine renferme, pour 100 parties en poids de résine, de 0,01 à 0,5 partie du stabilisant dihydropyridinique et moins de 1 partie en poids de stabilisant organostannique avec une quantité globale desdits stabilisants d'au moins 0,2 partie en poids.

2. Procédé suivant la revendication 1, caractérisé en ce que l'on utilise des proportions des stabilisants dihydropyridinique et organostannique telles que la résine renferme de 0,01 à 0,3 partie en poids du stabilisant dihydropyridinique et moins de 0,5 partie en poids du stabilisant organostannique pour 100 parties en poids de résine.

3. Procédé suivant la revendication 1, permettant en outre d'augmenter la durée au bout de laquelle on observe un collage de la résine sur le matériel de mise en œuvre, caractérisé en ce que l'on utilise pour ce faire des proportions de stabilisants dihydropyridinique et organostannique telles que la résine renferme, pour 100 parties en poids de résine, de 0,05 à 0,15 partie en poids du stabilisant dihydropyridinique et de 0,07 à 0,20 partie en poids de stabilisant organostannique avec une quantité globale desdits stabilisants allant de 0,2 à 0,3 partie en poids.

4. Procédé suivant l'une des revendications 1 à 4 caractérisé en ce que le stabilisant organostannique est choisi parmi le maléate de dibutyl étain, le di-(n-butyl) stanno bis(mercaptopropionate d'éthyle-2 hexyle), le di-(n-butyl) stanno bis(mercaptopropionate de n-octyle), le di-(n-octyl) stanno bis(mercaptoacétate de n-octyle), le di-(n-octyl) stanno bis(mercaptopropionate d'isooctyle), le di-(n-octyl) stanno bis(mercaptoacétate d'isooctyle), et le thia-6 distanna-5,7 dithio-5,7 undécane.

5. Procédé suivant l'une des revendications 1 à 4, caractérisé en ce que le stabilisant dihydropyridinique est le diméthyl-2,6 dihydro-1,4 pyridine dicarboxylate-3,5 de diméthyle.

6. Procédé suivant l'une des revendications 1 à 4, caractérisé en ce que le stabilisant dihydropyridinique est le diméthyle-2,6 dihydro-1,4 pyridine dicarboxylate-3,5 de didodécyle.

7. Procédé suivant l'une des revendications 1 à 6, caractérisé en ce que la résine vinylique est le chlorure de polyvinyle.

8. Procédé suivant l'une des revendications 1 à 6, caractérisé en ce que la résine vinylique est un copolymère du chlorure de vinyle.

9. Procédé suivant l'une des revendications 1 à 6, caractérisé en ce que la résine vinylique est un copolymère chlorure de vinyle/chlorure de vinylidène ou un mélange d'un tel copolymère avec le chlorure de polyvinyle.

10. Procédé suivant l'une des revendications 1 à 6, caractérisé en ce que la résine vinylique est un copolymère chlorure de vinyle/acétate de vinyle ou un mélange d'un tel copolymère avec le chlorure de polyvinyle.

**Claims**

1. Method for improving the resistance to degradation by heat and light of vinyl resins having bases

on one or more vinyl chloride polymers and/or copolymers, wherein there is added to the resin a stabiliser consisting of a 2,6-dimethyl 1,4-dihydro 3,5-pyridine dicarboxylate having the formula

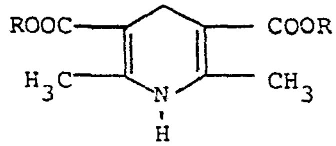

in which R represents a linear alkyl radical with 1 to 22 carbon atoms, an alkynyl or alkenyl linear radical with 3 to 18 carbon atoms, an aralkyl radical possibly substituted in the ortho or para position by a halogen atom or by a methyl or methoxy radical, or a $R_3$—O—$(CH_2)m$— radical wherein m assumes the value 2, 3 or 4 and $R_3$ represents a linear alkyl radical with 1 to 4 carbon atoms or a phenyl radical, characterised in that there is also incorporated in the resin a second stabiliser selected from organostannic derivatives satisfying one of the general formulas

$$(R_1)_2Sn(OCOR_2)_2$$
$$(R_1)_2Sn(SR_2)_2$$
$$(R_1)_2Sn\ [S(CH_2)_pCO_2R_2]_2$$
$$(R_1)_2Sn(C_4H_2O_4)$$
$$(C_4H_9Sn)_2S_3$$

in which formulas $R_1$ represents a branched or linear alkyl radical with 4 to 12 carbon atoms, $R_2$ designates a branched or linear alkyl radical with 4 to 18 carbon atoms, and p has the value 1 or 2, and that the said dihydro pyridine and organostannic stabilisers are used in proportions such that the resin contains, per 100 parts by weight of resin, 0.01 to 0.5 part of the dihydro pyridine stabiliser and less than 1 part by weight of organostannic stabiliser, with a total quantity of the said stabilisers of at least 0.2 part by weight.

2. Method according to claim 1, characterised in that the dihydro pyridine and organostannic stabilisers are used in proportions such that the resin contains 0.01 to 0.3 part by weight of the dihydro pyridine stabiliser and less than 0.5 part by weight of the organostannic stabiliser per 100 parts by weight of resin.

3. Method according to claim 1, also making it possible to lengthen the period of time at the end of which the resin is observed to stick to the material being used, characterised in that, in order to achieve this, the dihydro pyridine and organostannic stabilisers are used in proportions such that the resin contains per 100 parts by weight of resin 0.05 to 0.15 part by weight of dihydro pyridine stabiliser and 0.07 to 0.20 part by weight of organostannic stabiliser; with a total quantity of the said stabilisers ranging from 0.2 to 0.3 part by weight.

4. Method according to one of claims 1 to 3, characterised in that the organostannic stabiliser is chosen from tin dibutyl maleate, di-(n-butyl) stanno bis(2-ethyl-hexyl) mercaptopropionate), di-(n-butyl) stanno bis(n-octyl mercaptopropionate), di-(n-octyl) stanno bis(n-octyl mercaptoacetate), di-(n-octyl) stanno bis(isooctyl mercaptopropionate), di-(n-octyl) stanno bis(isooctyl mercaptoacetate), and 6-thia 5,7-distanna 5,7-dithio undecane.

5. Method according to one of claims 1 to 4, characterised in that the dihydro pyridine stabiliser is dimethyl-2,6-dimethyl 1,4-dihydro 3,5-pyridine dicarboxylate.

6. Method according to one of claims 1 to 4, characterised in that the dihydro pyridine stabiliser is didodecyl-2,6-dimethyl 1,4-dihydro 3,5-pyridine dicarboxylate.

7. Method according to one of claims 1 to 6, characterised in that the vinyl resin is polyvinyl chloride.

8. Method according to one of claims 1 to 6, characterised in that the vinyl resin is a vinyl chloride copolymer.

9. Method according to one of claims 1 to 6, characterised in that the vinyl resin is a vinyl chloride/vinylidene chloride copolymer, or a mixture of such a copolymer with polyvinyl chloride.

10. Method according to one of claims 1 to 6, characterised in that the vinyl resin is a vinyl chloride vinyl acetate copolymer or a mixture of such a copolymer with polyvinyl chloride.

**Ansprüche**

1. Verfahren zur Erhöhung der Festigkeit gegenüber wärme- und lichtbedingtem Abbau von Vinylharzen auf der Basis eines oder mehrerer Vinylchloridpolymere und/oder -copolymere, wobei man dem Harz einen Stabilisator, bestehend aus einem 2,6-Dimethyl-1,4-dihydropyridin-3,5-dicarboxylat der Formel

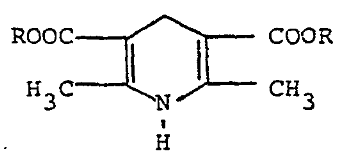

worin R einem linearen $C_1$-$C_{22}$-Alkylrest, einen linearen $C_3$-$C_{18}$-Alkenyl- oder Alkinylrest, einen gegebenenfalls in ortho- oder para-Stellung durch ein Halogenatom oder durch einem Methyl- oder Methoxyrest substituierten Aralkylrest, oder einen Rest $R_3$—O—$(CH_2)_m$ bedeutet, worin m 2, 3 oder 4, und $R_3$ einen linearen $C_1$-$C_4$-Alkylrest oder einen Phenylrest bedeutet, zusetzt, dadurch gekennzeichnet, daß man dem Harz einen zweiten Stabilisator aus der Gruppe der zinnorganischen Derivate einer der allgemeinen Formeln

$$(R_1)_2Sn(OCOR_2)_2$$
$$(R_1)_2Sn(SR_2)_2$$
$$(R_1)_2Sn\ [S(CH_2)_pCO_2R_2]_2$$
$$(R_1)_2Sn(C_4H_2O_4)$$
$$(C_4H_9Sn)_2S_3$$

worin $R_1$ einen linearen oder verzweigten $C_4$-$C_{12}$-Alkylrest, $R_2$ einen linearen oder verzweigten $C_4$-$C_{18}$-Alkylrest und p 1 oder 2 bedeuten, zusetzt und die Mengenverhältnisse von Dihydropyridin- und zinnorganischem Stabilisator dergestalt wählt, daß das Harz 0,01 bis 0,5 Gewichtsteile Dihydropyridinstabilisator und weniger als 1 Gewichtsteil zinnorganischen Stabilisator bei einer Stabilisatorgesamtmenge von mindestens 0,2 Gewichtsteilen pro 100 Gewichtsteile Harz enthält.

2. Verfahren nach Anspruch 1, dadurch gekennzeichnet, daß man die Mengenverhältnisse von Dihydropyridin- und zinnorganischem Stabilisator dergestalt wählt, daß das Harz 0,01 bis 0,3 Gewichtsteile Dihydropyridinstabilisator und weniger als 0,5 Gewichtsteile zinnorganischen Stabilisator pro 100 Gewichtsteile Harz enthält.

3. Verfahren nach Anspruch 1, bei dem der Verarbeitungszeitraum vor dem Kleben des Harzes zusätzlich erhöht werden kann, dadurch gekennzeichnet, daß man zu diesem Zweck die Mengenverhältnisse von Dihydropyridin- und zinnorganischem Stabilisator dergestalt wählt, daß das Harz 0,05 bis 0,15 Gewichtsteile Dihydropyridinstabilisator und 0,07 bis 0,20 Gewichsteile zinnorganischen Stabilisator bei einer Stabilisatorgesamtmenge von 0,2 bis 0,3 Gewichtsteile pro 100 Gewichtsteile Harz enthält.

4. Verfahren nach einem der Ansprüche 1 bis 3, dadurch gekennzeichnet, daß der zinnorganische Stabilisator aus Zinndibutylmaleat, Di-(n-butyl)-stanno-bis(ethyl-2-hexyl-mercaptopropionat), Di-(n-butyl)-stanno-bis(n-octyl-mercaptopropionat), Di-(n-octyl)-stanno-bis(n-octyl-mercaptoacetat), Di-(n-octyl)-stanno-bis(isooctyl-mercaptopropionat), Di(n-octyl)-stanno-bis(isooctyl-mercaptoacetat) und 6-Thia-5,7-distanna-5,7-dithio-undecan ausgewählt wird.

5. Verfahren nach einem der Ansprüche 1 bis 4, dadurch gekennzeichnet, daß der Dihydropyridinstabilisator 2,6-Dimethyl-1,4-dihydropyridin-3,5-dimethyldicarboxylat ist.

6. Verfahren nach einem der Ansprüche 1 bis 4, dadurch gekennzeichnet, daß der Dihydropyridinstabilisator 2,6-Dimethyl-1,4-dihydropyridin-3,5-didodecyldicarboxylat ist.

7. Verfahren nach einem der Ansprüche 1 bis 6, dadurch gekennzeichnet, daß das Vinylharz Polyvinylchlorid ist.

8. Verfahren nach einem der Ansprüche 1 bis 6, dadurch gekennzeichnet, daß das Vinylharz ein Vinylchloridcopolymer ist.

9. Verfahren nach einem der Ansprüche 1 bis 6, dadurch gekennzeichnet, daß das Vinylharz ein Vinylchlorid/Vinylidenchloridcopolymer oder ein Gemisch dieses Copolymers mit Polyvinylchlorid ist.

10. Verfahren nach einem der Ansprüche 1 bis 6, daduch gekennzeichnet, daß das Vinylharz ein Vinylchlorid/Vinylacetatcopolymer oder ein Gémisch dieses Copolymers mit Polyvinylchlorid ist.